# EUROPÄISCHE PATENTANMELDUNG

(11) **EP 1 078 729 A1**
(43) Veröffentlichungstag der Anmeldung: **28.02.2001**
(21) Anmeldenummer: 99116685.1
(22) Anmeldetag: 25.08.1999
(51) Int. Cl.: B29C 45/76, G01D 3/08, G05B 9/03, G05B 19/042

(54) **Spritzgiessmaschine mit Mittel zum Nachweisen des Versagen eines Sensors**

(71) Anmelder: ENGEL MASCHINENBAU GESELLSCHAFT MBH, A-4311 Schwertberg (AT)
(72) Erfinder: Urbanek, Otto, Dr. Dipl.-Ing., 4020 Linz (AT)
(74) Vertreter: Torggler, Paul, Dr.

(57) **Zusammenfassung**

Spritzgießmaschine für Kunststoffe, deren Betrieb durch die dauernde Überwachung mindestens einer Meßgröße bedingt ist, wobei eine Steuerung vorgesehen ist, welche bei Versagen eines die Meßgröße aufnehmenden Sensors ein Signal abgibt, wobei ein und dieselben Meßgrößen mindestens zwei Sensoren (3, 3') zugeordnet sind und die Steuerung das Versagen eines Sensors (3, 3') registriert, ohne den Stillstand der Maschine zu veranlassen.

## Beschreibung

Die Erfindung bezieht sich auf eine Spritzgießmaschine für Kunststoffe, deren Betrieb durch die dauernde Überwachung mindestens einer Meßgröße bedingt ist, wobei eine Steuerung vorgesehen ist, welche bei Versagen eines die Meßgröße aufnehmenden Sensors ein Signal abgibt.

Um die Sicherung der Einrichtung und eine Mindestqualität des Produktes zu garantieren, müssen beim Betrieb einer Spritzgießmaschine einige Parameter dauernd überwacht werden. Bei Ausfall der Überwachungseinrichtung ist also ein sofortiges Abschalten der Maschine erforderlich. Typischerweise wird der Hub der beweglichen Formaufspannplatte und der des Auswerfers auf der Schließseite und der Hub der Spritzeinheit sowie der Hub der Dosierschnecke im Meßzylinder auf der Spritzseite überwacht. Endschalter überwachen das Erreichen vorgegebener Positionen, beispielsweise die Endstellung einer Mutter. Temperatursensoren sind dem Meßzylinder der Kühlflüssigkeit für die Formkühlung sowie der allenfalls vorgesehenen Hydraulikflüssigkeit zugeordnet. Bei hydraulisch angetriebenen Maschinen wird jedenfalls der Druck im Spritzzylinder sowie der Druck in jeder Einfachhydraulikpumpe sowie der Druck im Hochdruckschließzylinder (Druck höher als ...) überwacht.

Bereits für Doppelpumpen, bei mit niedrigem Druck arbeitenden Schließzylindern sowie Hydraulikspeichern verzichtet man vielfach auf die dauernde Überwachung, jedenfalls aber auf das automatische Abschalten der Einrichtung bei Ausfall des Sensors. Insbesondere Druck- und Wegaufnehmer zeigen nämlich das Problem, daß ihre Lebensdauer schwer voraussehbar ist und ihre Funktionsfähigkeit plötzlich endet. Am ehesten ist noch bei Temperatursensoren allmähliche Verschlechterung zu beobachten, welche die Notwendigkeit eines baldigen Austausches anzeigt.

An sich ist der Preis von Sensoren im Vergleich zu jeder der Maschinen gering. Der Austausch der Sensoren ist jedoch zeitraubend, da insbesondere Wegmesser meist schwer zugänglich sind und Temperatursensoren erst nach Abkühlung der Maschine ausgetauscht werden können. Man hat daher bisher versucht, mit einer möglichst geringen Zahl von überwachten Meßgrößen auszukommen, wobei jedem Parameter nur ein Sensor zugeordnet wurde. Die Betriebsunterbrechung bei Ausfall des Sensors wurde in Kauf genommen.

Grundlage der Erfindung ist die Überlegung, daß der Aufwand nicht nur für die Anschaffung, sondern auch für den Austausch einer größeren Zahl von Sensoren gerechtfertigt ist, wenn die Zahl der ungeplanten Betriebsunterbrechungen vermindert werden kann. Diese Aufgabe wird dadurch gelöst, daß ein und dieselben Meßgrößen mindestens zwei Sensoren zugeordnet sind und die Steuerung das Versagen eines Sensors registriert, ohne den Stillstand der Maschine zu veranlassen.

Ein und dieselbe Meßgröße im Sinn der Erfindung liegt dann vor, wenn bei idealer Funktion die zugeordneten Sensoren den gleichen Wert anzeigen würden. Dies ist deutlich von dem Fall zu unterscheiden, daß beispielsweise die Dehnung jedes der vier Holme einer Spritzgießmaschine einzeln gemessen und aus den durchaus unterschiedlichen Ergebnissen der Schließdruck errechnet wird. Selbst die Einbringung von Dehnmeßstreifen an verschiedenen Seiten eines Holmes um die Biegung des Holmes feststellen zu können, hätte nichts mit der Erfindung zu tun, da die von den Sensoren gelieferten Ergebnisse nicht grundsätzlich austauschbar wären.

Der Hauptvorteil der Erfindung liegt darin, daß der Austausch ausgefallener Sensoren nur mehr im Rahmen einer regelmäßigen Wartung erfolgen muß. Da die identische Größen messenden Sensoren räumlich zusammengefaßt werden können, führt die erfindungsgemäße Vergrößerung der Sensorenzahl zu einer proportionalen Vergrößerung der Kosten. Zwei oder mehr zusammengehörige Sensoren können nämlich in einer Halterung zusammengefaßt werden, wobei ein die Sensoren umschließendes Gehäuse auch die Auswerteschaltung umfassen kann, welche neben dem Meßwert auch die Information über den Zustand der Meßfühler weiter gibt.

Vermindert sich durch Ausfall der Sensoren die Redundanz des Systems, so kann dies nach außen angezeigt werden, was unter Umständen die Möglichkeit schafft, bei laufendem Betrieb den Normalzustand wieder herzustellen. Dies ist insbesondere dann der Fall, wenn vorgesehen wird, daß zwischen mindestens einem Sensor zur Überwachung eines Flüssigkeitsdruckes und der überwachten Flüssigkeit eine Absperrung vorgesehen ist.

Weitere Einzelheiten der Erfindung werden anschließend anhand der Zeichnungen erläutert.

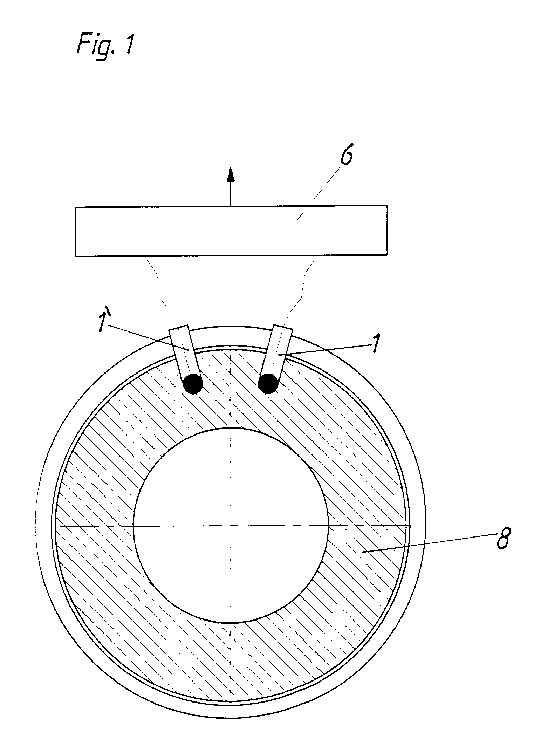

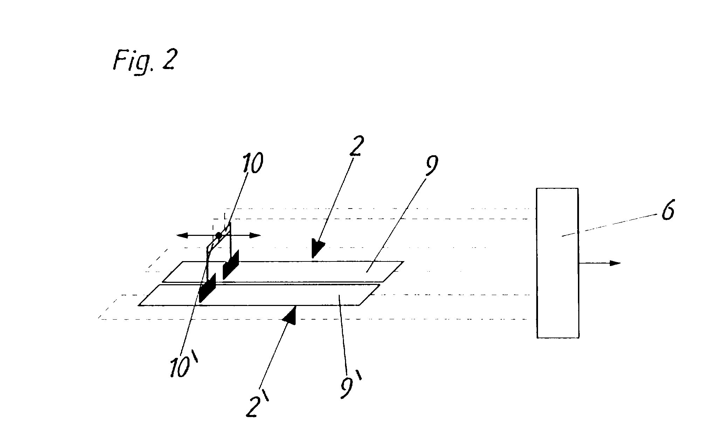

In dieser bezieht sich Fig. 1 auf die erfindungsgemäße Anordnung von Thermosensoren, Fig. 2 auf Wegmesser,

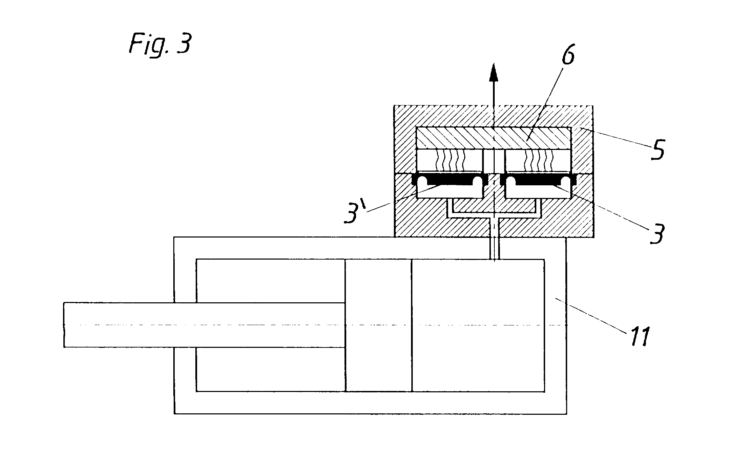

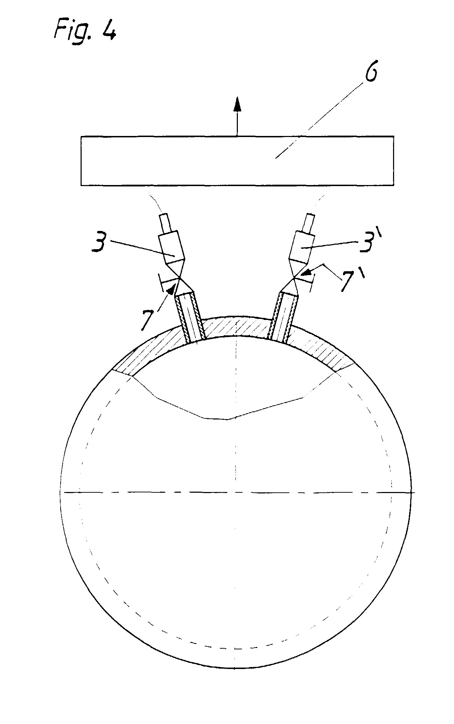

Fig. 3 und 4 auf verschiedene Ausführungen von Druckaufnehmern.

Beim Ausführungsbeispiel nach Fig. 1 sind zwei Sensoren 1, 1', welche als Temperaturfühler ausgebildet sind, in unmittelbarer Nachbarschaft am Meßzylinder 8 einer im übrigen nicht dargestellten Spritzgießmaschine für thermoplastische Kunststoffe angeordnet. Die Meßsignale der Sensoren 1, 1' werden einer Auswerteschaltung 6 zugleitet, welche aus der im Idealfall verschwindenden Differenz der Meßwerte der beiden Sensoren die entsprechenden Schlüsse zieht. Insbesondere wird bei Ausfall eines Sensors das Signal des anderen Sensors und die Information über den Ausfall weitergeleitet.

Das Versagen eines Sensors muß nicht durch das völlige Ausbleiben des Meßwertes charakterisiert sein, es kann auch bereits angenommen werden, wenn die Meßwerte außerhalb eines vernünftigen Bereichs liegen. Insbesondere kann vorgesehen werden, daß mehr als zwei Sensoren einer Meßgröße zugeordnet sind und die Abweichung des von einem Sensor festgestellten Wertes von dem durch die anderen Sensoren festgestellten Wert als Versagen interpretiert wird.

Die im Zusammenhang mit Fig. 1 entwickelten Überlegungen gelten unabhängig von der überwachten physikalischen Größe, beispielsweise ist in Fig. 2 ein Wegaufnehmer dargestellt, bei dem Sensoren 2, 2' die Beschreibung von Kontaktbürsten 10, 10' entlang der Leiterbahnen 9. 9' feststellen. Wiederum führt der Ausfall eines Sensors lediglich zu einer Anzeige über die verminderte Redundanz, nicht aber zum Stillstand der Maschine.

Beim Ausführungsbeispiel nach Fig. 3 wird der Druck der Flüssigkeit im Hydraulikzylinder 11 überwacht. Dieser wird den getrennten Membranen der Sensoren 3, 3' zugeführt, deren Durchbiegung ein Meßsignal an die Auswerteschaltung 6 bedingt. Beide Sensoren 3, 3' sind in einem gemeinsamen Gehäuse angeordnet, was die Kosten verringert und die Montage vereinfacht. Im Gegensatz dazu sind beim Ausführungsbeispiel nach Fig. 4 die Sensoren 3, 3' getrennt, Absperrungen 7, 7' erlauben es jedoch, einen beschädigten Sensor ohne Betriebsunterbrechung der Anlage auszutauschen.

Der die Meßgröße überwachende Sensor muß nicht wie in den angeführten Beispielen ein kontinuierliches Wertespektrum anzeigen. Die Erfindung ist auch in Fällen anwendbar, in welchen lediglich das Erreichen bzw. das Nichterreichen eines bestimmten Wertes dauernd überwacht wird, wie dies beispielsweise bei der Verwendung von Endschaltern der Fall ist.

## Patentansprüche

1. Spritzgießmaschine für Kunststoffe, deren Betrieb durch die dauernde Überwachung mindestens einer Meßgröße bedingt ist, wobei eine Steuerung vorgesehen ist, welche bei Versagen eines die Meßgröße aufnehmenden Sensors ein Signal abgibt, dadurch gekennzeichnet, daß ein und dieselben Meßgrößen mindestens zwei Sensoren (1, 1'; 2, 2'; 3, 3') zugeordnet sind und die Steuerung das Versagen eines Sensors (1, 1'; 2, 2'; 3, 3') registriert, ohne den Stillstand der Maschine zu veranlassen.

2. Spritzgießmaschine für Kunststoffe nach Anspruch 1, dadurch gekennzeichnet, daß mehr als zwei Sensoren einer Meßgröße zugeordnet sind und die Abweichung des von einem Sensor festgestellten Wertes von dem durch die anderen Sensoren festgestellten Wert als Versagen interpretiert wird.

3. Spritzgießmaschine für Kunststoffe nach Anspruch 1 oder 2, dadurch gekennzeichnet, daß mindestens zwei Sensoren für dieselbe Meßgröße räumlich zusammengefaßt, insbesondere in eine Halterung zusammengefaßt sind.

4. Spritzgießmaschine für Kunststoffe nach Anspruch 3, dadurch gekennzeichnet, daß ein Gehäuse (5) mindestens zwei Sensoren und eine Auswerteschaltung (6) umfaßt.

5. Spritzgießmaschine für Kunststoffe nach einem der vorhergehenden Ansprüche, dadurch gekennzeichnet, daß zwischen mindestens einem Sensor (3, 3') zur Überwachung eines Flüssigkeitsdruckes und der überwachten Flüssigkeit eine Absperrung (7, 7') vorgesehen ist.
